# EUROPÄISCHE PATENTSCHRIFT

(11) **EP 0 820 333 B1**
(45) Veröffentlichungstag und Bekanntmachung des Hinweises auf die Patenterteilung: **13.01.1999**
(21) Anmeldenummer: 96910961.0
(22) Anmeldetag: 12.04.1996
(51) Int. Cl.: A63G 31/00, B61H 7/08, H02K 49/04

(54) **BELUSTIGUNGSVORRICHTUNG**
AMUSEMENT DEVICE
INSTALLATION DE DIVERTISSEMENT

(30) Priorität: 13.04.1995 DE 29506374 U
(43) Veröffentlichungstag der Anmeldung: 28.01.1998
(73) Patentinhaber: Spieldiener, Robert, 9490 Vaduz (LI); Spieldiener, Reinhold, 8704 Herrliberg (CH); Spieldiener, Patrick, 8832 Wollerau (CH); Saiko, Alfons, 8942 Oberrieden (CH)
(72) Erfinder: SPIELDIENER, Robert, FL-9490 Vaduz (LI); SPIELDIENER, Reinhold, CH-8704 Herrliberg (CH); SPIELDIENER, Patrick, CH-8832 Wollerau (CH); SAIKO, Alfons, CH-8942 Oberrieden (CH); ROSNER, Peter, D-81371 München (DE)
(74) Vertreter: Ernicke, Hans-Dieter, Dipl.-Ing.
(86) Internationale Anmeldenummer: EP9601554
(87) Internationale Veröffentlichungsnummer: WO9632172

(56) Entgegenhaltungen:
- CH-A- 591 378
- DE-A- 2 008 432
- US-A- 2 221 215

## Beschreibung

Die Erfindung betrifft eine Vorrichtung zur Volksbelustigung mit den Merkmalen im Hauptanspruch.

Eine solche Belustigungsvorrichtung ist aus der US-A-1,827,162 in Form einer Schienenbahn bekannt. In der Praxis sind derlei Belustigungsvorrichtungen auch in verschiedenen anderen Ausführungen bekannt, z.B. als Achterbahn, Fallgerüst, Rampenbahn, Loopings oder dergleichen. Sie besitzen ein oder mehrere Fahrgastträger, die an einem stationären Vorrichtungsteil, z.B. einem Gestell, Fahrbahn, Gerüst oder dergleichen beweglich angeordnet sind. Die Fahrgastträger haben keinen eigenen Antriebsmotor, sondern bewegen sich bei der Abwärtsfahrt durch Schwerkraft. Ein stationärer Hubantrieb bringt sie dazu auf die erforderliche Höhe und läßt sie frei fahren. Die Belustigungsvorrichtung besitzt eine Bremseinrichtung, mit der die Fahrgastträger gebremst und gegebenenfalls auch zum Stillstand gebracht werden. Die US-A-1,827,162 zeigt eine mechanisch wirkende Reibungsbremse, die z.B. als Zangenbremse ausgebildet ist. Hier wirken beidseitig in der Strecke angeordnete, bewegliche Bremsbacken auf ein zentrales Bremsschwert am Fahrzeug. Zur Betätigung sind Bremsantriebe und eine Steuerung erforderlich. Außerdem unterliegen die Bremsbacken einem erheblichen Verschleiß und müssen regelmäßig ausgetauscht werden. Die Bremseinrichtungen bedürfen einer häufigen und intensiven Überwachung und Wartung.

Wirbelstrombremsen sind in anderen, gattungsfremden Bereichen der Technik in verschiedenen Ausführungen bekannt. Die DE-C-36 02 612 zeigt eine rotatorische Wirbelstrombremse zum Einsatz in den Radnaben von Lkws. Auch bei Hochgeschwindigkeitszügen wie dem ICE kommen nach der Literaturstelle "Prinzip, Entwicklung und Konstruktion der linearen Wirbelstrombremsen" in ZEV-Glas. Ann.109 (1985) Nr. 9 September, Seiten 368 bis 374 und der DE-A-37 43 934 Wirbelstrombremsen zum Einsatz. Eine Induktionsbremse für Magnetschwebefahrzeuge zeigt das DE-U-94 06 330. Eine schaltbare dauermagnetische Bremse für Schienenfahrzeuge offenbaren die DE-A-29 31 539 und die EP-A 0 057 778. Feste Dauermagnete werden hier mit mechanisch bewegten Dauermagneten kombiniert, um die Bremswirkung ein- und ausschalten zu können. Aus der DE-A-20 08 432 ist noch eine Magnetbremse für Straßenbahnen und andere Schienenfahrzeuge bekannt, die Bremsmagnete am Fahrzeug und eine ortsfeste magnetische Schiene vorsieht. In all diesen Anwendungsbereichen handelt es sich um elektrisch schaltbare Magnetbremsen für Kraftfahrzeuge, die einen eigenen Antrieb und eine leistungsfähige Stromversorgung besitzen, mit der die Magnetbremse betätigt werden kann. Bei motorlosen Fahrgastträgern von Belustigungsvorrichtungen ist dies nicht vorhanden.

Es ist Aufgabe der vorliegenden Erfindung, eine bessere Bremseinrichtung für Belustigungsvorrichtungen aufzuzeigen.

Die Erfindung löst diese Aufgabe mit den Merkmalen im Hauptanspruch.
Die Bremseinrichtung der Belustigungsvorrichtung ist nach der Erfindung als Wirbelstrombremse ausgestaltet. Eine Wirbelstrombremse ist verschleißarm, mechanisch robust, störsicher und weitgehend unempfindlich gegen äußere Einflüsse. Sie braucht wesentlich weniger Überwachungs-, Wartungs- und Nachstellaufwand als eine mechanische Reibbremse. Sie arbeitet zuverlässiger und hat entscheidende Vorteile bei der Ausfallsicherheit und der Unfallsicherheit. Außerdem sind zumindest in der einfachen Ausführungsform weder Bremsantriebe noch Steuer- oder Betätigungseinrichtungen erforderlich. Die Entbehrlichkeit von Bremsantrieben ist für Belustigungsvorrichtung von Vorteil, weil deren Fahrgastträger durch Schwerkraft angetrieben sind und keinen Motor und meist keine Spannungsversorgung besitzen.

Die Wirbelstrombremse läßt sich in ihrer Charakteristik in weiten Grenzen beeinflussen und an den jeweiligen Einsatzzweck sowie die Art der Belustigungsvorrichtung optimal anpassen. Hierfür stehen verschiedene Bremsparameter zur Verfügung, die in ihrer Wirkung kombiniert und aufeinander abgestimmt werden können. Die Einstellmöglichkeiten sind größer und der erforderliche Aufwand geringer als bei einer mechanischen Bremse.

Insbesondere kann ein ergonomisch günstiger, im wesentlichen konstanter Bremsruck erzielt werden. Der Ruck tritt beim Eintauchen auf. Die Staffelung der Beläge und die linear wachsende Überdeckung von Leitteil und Erregerteil wirken sich besonders günstig auf die Konstanthaltung des Rucks aus.

Die Schwellzeit der Wirbelstrombremse ist fest einstellbar und unterliegt kaum einer Beeinflussung durch äußere Umgebungsbedingungen, wie Feuchtigkeit, Temperatur etc.. Dadurch ist die Bremswirkung auch unter wechselnden Betriebsbedingungen im wesentlichen konstant.

Die erfindungsgemäße Wirbelstrombremse ist vorzugsweise als Linearbremse ausgebildet, die über eine bestimmte Wegstrecke ihre Bremswirkung entfaltet. Von besonderem Vorteil ist dabei die Möglichkeit, die Bremswirkung über die Länge der Bremsstrecke zu verändern. Dadurch läßt sich z.B. ein weiches Einbremsen mit einer ergonomisch günstigen und sicheren Verzögerung gewährleisten, wobei der Fahrreiz gewahrt bleibt.

Eine Wirbelstrombremse hat den besonderen Vorteil, daß sie eine gewisse Selbstregelung aufweist. Dabei werden auch Gewichtsunterschiede am Fahrgastträger reguliert, so daß unabhängig von Gewicht und Personenzahl im wesentlichen stets die gleiche Bremswirkung bzw. Bremsverzögerung erreicht wird.

Dies ist insbesondere für Fahrgeschäfte in Gestalt von Fallgerüsten günstig, bei denen ein oder mehrere Fahrgastträger an einem vertikalen oder schrägen Mast hochgezogen und nach dem Ausklinken in freiem Fall zu Boden stürzt. Hier werden besondere Anforderungen an die Bremswirkung und vor allem auch an die Ausfall- und Unfallsicherheit gestellt, denen eine Wirbelstrombremse in besonderem Maße gerecht wird. Auch die Nivellierung der Gewichtsunterschiede durch die Wirbelstrombremse bringt hier besondere Vorteile.

Die Wirbelstrombremse kann für die Rückwärtsfahrt des Fahrgastträgers abgeschaltet oder geschwächt werden. Hierdurch lassen sich die benötigte Antriebsleistung und die Rückfahrzeiten verringern. Die Leistung, der Personendurchsatz und die Wirtschaftlichkeit der Belustigungsvorrichtung steigen. Besondere Vorteile ergeben sich für Fallgerüste.

In den Unteransprüchen sind weitere vorteilhafte Ausgestaltungen der Belustigungsvorrichtung und der Wirbelstrombremse angegeben.

Die Erfindung ist in den Zeichnungen beispielsweise und schematisch dargestellt. Im einzelnen zeigen:
- Figur 1 und 2:: eine Belustigungsvorrichtung in Gestalt eines Fallgerüstes in Seitenansicht und Draufsicht,
- Figur 3 und 4:: den Fahrgastträger mit Teilen der Wirbelstrombremse in abgebrochener und vergrößerter Darstellung in Seitenansicht und Draufsicht,
- Figur 5:: eine vergrößerte Draufsicht auf die Wirbelstrombremse,
- Figur 6:: eine perspektivische Darstellung des Erregerteils der Wirbelstrombremse mit der Magnetanordnung,
- Figur 7 und 8:: eine abgebrochene und vergrößerte Darstellung der Magnetanordnung in Querschnitt und Draufsicht,
- Figur 9:: eine Einrichtung zum Abschalten oder Schwächen der Bremswirkung in Draufsicht und zwei Betriebsstellungen und
- Figur 10 und 11:: ein in Segmente unterteiltes Leitteil in in Seitenansicht und zwei Betriebsstellungen.

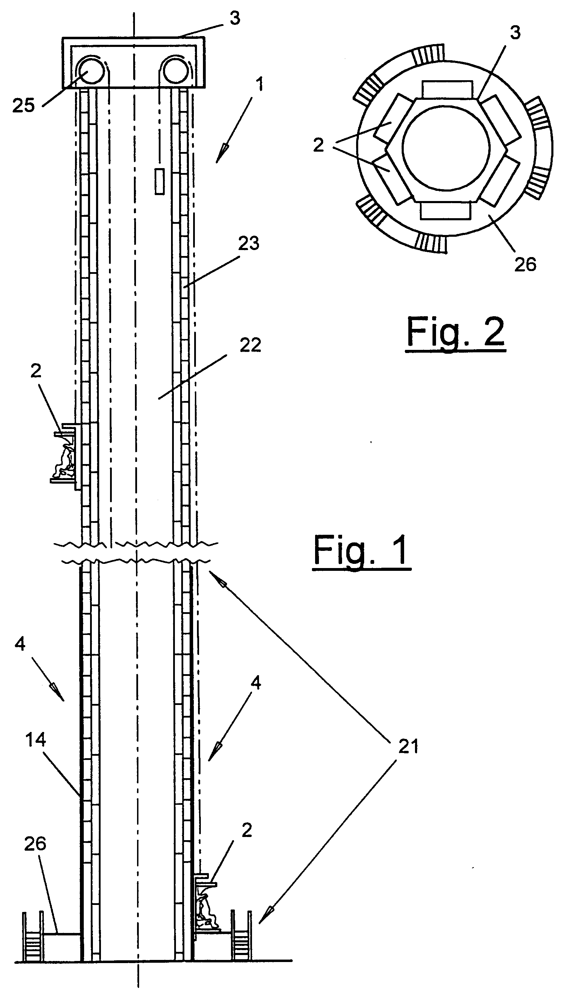

Figur 1 und 2 zeigen eine Belustigungsvorrichtung (1) in der Übersicht. Sie ist als ein Fahrgeschäft in Gestalt eines Fallgerüstes ausgebildet. Die Belustigungsvorrichtung (1) besitzt einen stationären Vorrichtungsteil, der hier von einem hohen vertikalen oder schrägen Mast (22) mit einer bodenseitigen Plattform (26) gebildet wird. Am Mast (22) sind über Fahrschienen (23) mehrere bewegliche Vorrichtungsteile (2), hier in Form von Fahrgastträgern, vertikal auf- und abfahrbar gelagert. Alternativ kann auch eine größere Gondel vorgesehen sein. Der oder die Fahrgastträger (2) können sich außerdem ggf. rund um den Mast (22) drehen. Dazu haben sie eine entsprechende Drehlagerung und ggf. einen Drehantrieb.

Die Fahrgastträger (2) werden mittels eines Hubantriebes (25) nach oben gezogen. An der Mastspitze werden sie vom Hubantrieb (25) ausgeklinkt und stürzen durch Schwerkraft im freien Fall nach unten, wobei die Fahrgastträger (2) über Fahrwerke (24) an den Fahrschienen (23) geführt sind. Zum Abbremsen des Sturzes ist zumindest im Fußbereich des Mastes (22) eine Bremsstrecke (21) mit einer als Wirbelstrombremse ausgebildeten Bremseinrichtung (4) vorgesehen.

Die Wirbelstrombremse (4) ist vorzugsweise als Linearbremse ausgebildet, die den Sturz weich abbremst und die Fallgeschwindigkeit bis auf einen kleinen Restwert reduziert. In Bodennähe kann noch ein Stoßdämpfer (nicht dargestellt) angeordnet sein, der die Fahrgastträger (2) an der Plattform (26) zum Stillstand bringt. Die Wirbelstrombremse (4) ist so ausgelegt, daß die Verzögerung kleiner als 5 g ist und die maximale Verzögerung sich erst nach einer Dauer von ca. einer halben Sekunde oder mehr aufbaut.

Anstelle des gezeigten Fallgerüstes kann die Belustigungsvorrichtung (1) auch in beliebiger anderer Weise, z. B. als Achterbahn oder dergleichen anderes Fahrgeschäft ausgebildet sein. Die Wirbelstrombremse (4) eignet sich besonders für Fahrgeschäfte, bei denen die beweglichen Vorrichtungsteile (2) durch ihr Eigengewicht und durch Schwerkraft bewegt werden.

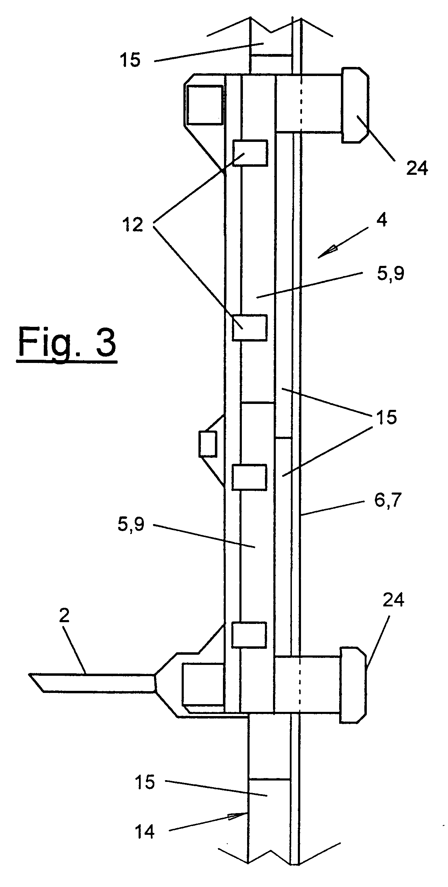

Figur 3 bis 11 verdeutlichen die Ausbildung der Wirbelstrombremse (4) im einzelnen. Sie besteht aus mindestens einem Erregerteil (5) mit einer Magnetanordnung und mindestens einem Leitteil (6) mit einer elektrischen Leitanordnung. Beide Teile (5,6) sind schienenartig ausgebildet und erstrecken sich längs der Fallrichtung. Zwischen Erregerteil (5) und Leitteil (6) ist ein Luftspalt (7) vorhanden. Im gezeigten Ausführungsbeispiel ist das Erregerteil (5) am beweglichen Vorrichtungsteil (2) bzw. dem Fahrgastträger angeordnet. Das Leitteil (6) befindet sich am stationären Vorrichtungsteil (3) bzw. am Mast (22). Das Leitteil (6) ist wesentlich länger als das Erregerteil (5).

Die Zuordnung kann auch umgekehrt sein. Die Umkehr empfiehlt sich beispielsweise bei einer Achterbahn, bei der das Leitteil (6) an den verschiedenen Fahrgastträgern und das Erregerteil (5) stationär an der Bremsstrecke im Bahnhofsbereich angeordnet ist.

Figur 3 bis 8 verdeutlichen den Aufbau der Wirbelstrombremse (4) im einzelnen. Der Fahrgastträger (2) besitzt einen Rahmen mit mehreren Sitzen (nicht dargestellt) und ist über das vorerwähnte Fahrwerk (24) an mindestens einer vertikalen Fahrschiene (23) des Mastes (22) höhenbeweglich gelagert. Das Erregerteil (5) und das Leitteil (6) sind jeweils doppelt vorhanden, wobei die beiden Erregerteile (5) die zugehörigen Leitteile (6) jochartig umgreifen. Die Jochausbildung gleicht die magnetischen Anziehungskräfte zumindest teilweise aus und erleichtert die Konstruktion. Zwischen den mit seitlichem Abstand angeordneten Erregerteilen (5) befindet sich eine Gleitführung (18), die die Seitenkräfte zusätzlich abstützt und die Wirbelstrombremse (4) stabilisiert.

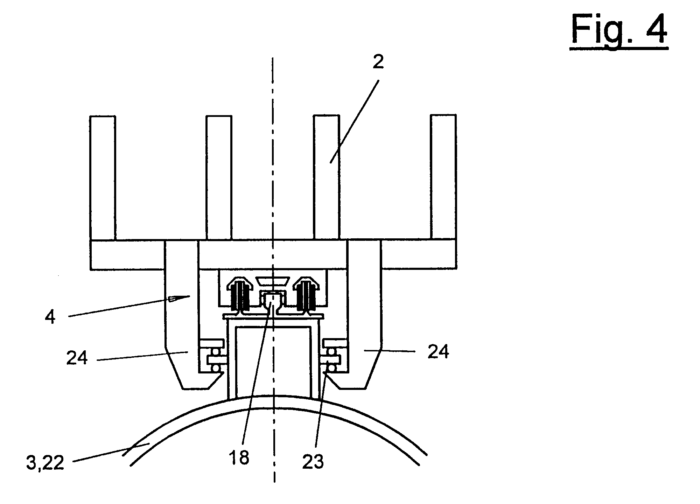

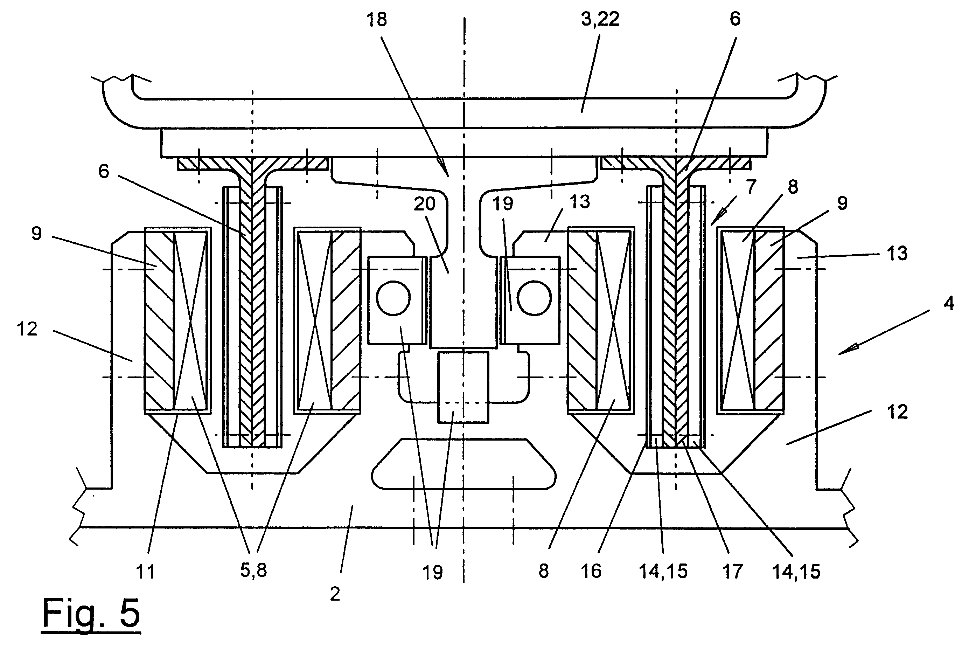

Wie Figur 4 und 5 in der Draufsicht verdeutlichen, besitzt das Erregerteil (5) zwei Magnetträger (12), die jeweils als Joch ausgebildet sind. An den Jocharmen (13) befinden sich innenseitig die leisten- oder schienenförmigen Magnetanordnungen. Sie bestehen aus mehreren in Reihe hintereinander angeordneten Magnetelementen (8), die vorzugsweise als starke Permanentmagnete aus einem geeigneten Material, z.B. NdFe, ausgebildet sind.

Die Magnetelemente (8) sind auf einer durchgehenden magnetisch leitfähigen metallischen Tragleiste (9) befestigt, welche im vorliegenden Ausführungsbeispiel als Eisenrücken ausgebildet ist. Sie kann auch aus einem beliebigen anderen geeigneten Material bestehen. Über den Magnetelementen (8) befindet sich eine vorzugsweise Abdeckung (11), die an der Tragleiste (9) befestigt ist. Die Abdeckung (11) kann aus einem unmagnetischen rostfreien Stahl oder einen beliebig anderen geeigneten Material bestehen.

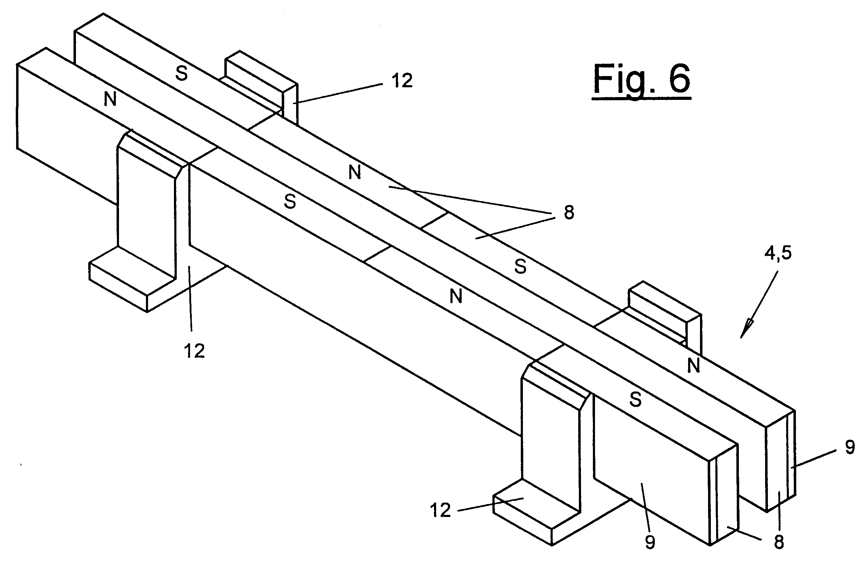

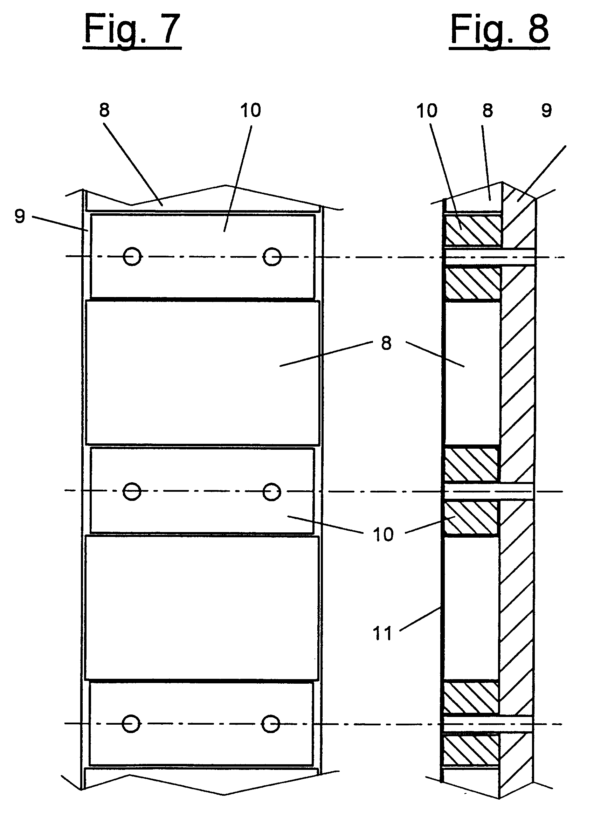

Wie aus Figur 6 ersichtlich, sind die beiden schienenförmigen Magnetanordnungen parallel ausgerichtet und haben eine endliche Länge von z.B. 2 m. Figur 7 und 8 zeigen die Anordnung der Magnetelemente (8) im einzelnen. Die Magnetelemente (8) sind längs der Tragleiste (9) mit Abstand hintereinander angeordnet und durch nichtmagnetische Zwischenstücke (10) voneinander getrennt sowie in Fallrichtung abgestützt. Die Befestigung der Magnetelemente (8) und der Zwischenstücke (8) kann durch Verklebung mit der Tragleiste (9), durch Spannstifte oder auf beliebige andere geeignete Weise geschehen.

Gemäß Figur 6 wechselt die Polung der Magnetelemente (8) in Längsrichtung der Tragleiste (9). Hintereinander liegende Magnetelemente (8) haben dadurch stets eine unterschiedliche Polung. Ein Polungsunterschied besteht auch zwischen den jeweils einander gegenüber liegenden Magnetelementen (8). Der Magnetfluß läuft durch diese Polung zwischen den beiden Magnetleisten quer durch das Leitteil (6). Dadurch kann Material im Leitteil (6) gespart werden.

Wie Figur 4 und 5 verdeutlichen, bestehen die beiden Leitteile (6) jeweils aus einem vertikal ausgerichteten Belagträger (17) in Form einer am Mast (22) befestigten Schiene. Die Schiene (17) erstreckt sich vorzugsweise über die gesamte Masthöhe. Im Bereich der Bremsstrecke (21) kann auf dem Belagträger (17) beidseits ein Leitbelag (14) aus einem elektrisch leitfähigen Material, z. B. Kupfer, Aluminium, rostfreien Stahl oder dergleichen angebracht sein. Zwischen den Leitbelägen (14) bzw. dem Belagträger und den beidseits umgreifenden Magnetanordnungen (8) besteht ein Luftspalt (7). Die Leitbeläge (14) sind ebenfalls mit einer nichtmagnetischen Abdeckung (16), z.B. einem Kupferblech oder dergleichen, versehen.

Beim Sturz des Fahrgastträgers (2) überfahren in der Bremsstrecke (21) die Magnetelemente (8) den Belagträger (17) und die Leitbeläge (14). Durch die Bewegung und die Polwechsel werden Wirbelströme induziert, die eine magnetische Bremskraft erzeugen. Die Bremskräfte hängen von verschiedenen Parametern, wie Fallgeschwindigkeit, Polwechselfrequenz, Magnetstärke, elektrischer Leitfähigkeit und oder Dicke des Belagträgers (17) bzw. der Leitbeläge (14), Luftspaltbreite, Überdeckung von Erreger- und Leitteil (5,6) etc. ab. Sie lassen sich durch Veränderung und auch Kombination der Parameter gezielt beeinflussen.

Die Wirbelstrombremse (4) hat durch die Geschwindigkeitsabhängigkeit eine gewisse Selbstregelung und gleicht Gewichts- und Beladungsunterschiede des mehrsitzigen Fahrgastträgers (2) weitgehend aus. Je höher das Gewicht des Fahrgastträgers (2) ist, desto langsamer nimmt seine Fallgeschwindigkeit unter der Bremswirkung ab. Dies hat umgekehrt aber zur Folge, daß die höhere Geschwindigkeit eine höhere Bremskraft hervorruft, die das Mehrgewicht zumindest teilweise kompensiert.

Die Bremswirkung kann in weiten Grenzen beliebig eingestellt werden. Die Bremskräfte können über die Länge der Bremsstrecke (21) variieren oder gleichmäßig sein. Im bevorzugten und gezeigten Ausführungsbeispiel ist die Wirbelstrombremse (4) so ausgelegt, daß die Bremskraft im wesentlichen gleich bleibt, auch wenn die Fallgeschwindigkeit abnimmt. Dadurch wird eine günstig kurze Bremsstrecke erreicht.

Die Bremskraft hängt wesentlich von der Fall- oder Fahrgeschwindigkeit bzw. der Polwechselfrequenz ab. Die Kennlinie bildet im wesentlichen eine konvexe Kurve. Die Bremskraft nimmt mit steigender Geschwindigkeit je nach Leitmaterial mehr oder weniger steil bis zu einem Maximalwert zu und fällt dann wieder ab. Im praktisch genutzten Kennlinienbereich hat eine durch die Bremsung sinkende Geschwindigkeit oder Frequenz in der Regel eine Abnahme der Bremskraft zu Folge. Dieser Bremskraftverlust kann durch verschiedene nachfolgend beschriebene Maßnahmen zumindest kompensiert werden.

Zum einen hängt die Bremskraft von der elektrischen Leitfähigkeit, d.h. dem Werkstoff von Belagträger (17) und Belägen (14), sowie deren Dicke ab. Im gezeigten Ausführungsbeispiel besteht der Leitbelag (14) aus mehreren hintereinander angeordneten Belagelementen (15). Innerhalb der Belagelementsreihe ändert sich der Belagwerkstoff und damit die elektrische Leitfähigkeit. Eingangs der Bremsstrecke (21) sind ein oder mehrere Belagelemente (15) aus einem rostfreien Stahl angeordnet. Danach folgt Aluminium und zum Schluß Kupfer. Über die gesteigerte elektrische Leitfähigkeit nimmt längs der Bremsstrecke (21) die Bremskraft der Belagelemente (15) zu. Zusätzlich oder alternativ kann sich die Dicke der Belagelemente (15) ändern. Sie nimmt über die Länge der Bremsstrecke (21) kontinuierlich oder elementweise zu, wodurch sich ebenfalls die Bremskraft erhöht.

Andererseits beeinflußt auch die Frequenz der Polwechsel die Bremskraft. Zusätzlich oder alternativ kann sich am Erregerteil (5) die Länge der Magnetelemente (8) ändern, indem sie beispielsweise längs der Tragleisten (9) von unten nach oben sich verkürzt. Über die kürzere Elementlänge und die entsprechend höhere Polwechselfrequenz ist die Bremskraft im vorderen Bereich des Erregerteils (5) höher als im unteren Bereich. Dies kann sich besonders zu Beginn der Bremsstrecke (21) auswirken, wenn das Erregerteil (5) erstmalig auf das Leitteil (6) trifft und dieses nach und nach überdeckt. Die Beeinflussung der Polwechselfrequenz durch unterschiedliche Länge der Magnetelemente (8) eignet sich besonders für ein stationär angeordnetes Erregerteil (5), wie es z.B. im Bahnhofsbereich von Schienenfahrgeschäften, wie Achterbahnen etc. vorgesehen sein kann. Sie ist aber auch für die gezeigte Wirbelstrombremse (4) mit bewegtem Erregerteil (5) nutzbar.

Die Bremswirkung hängt auch vom Grad der Überdeckung der beiden Teile (5,6) ab. Sie steigt mit der Größe der Überdeckung. Mit der linear wachsenden Überdeckung ergibt sich ein besonders weiches Einbremsen und ein ergonomisch günstiger konstanter Ruck.

Mit anwachsender Überdeckung kommen die im vorderen Bereich angeordneten ggf. kürzeren Magnetelemente (8) zur Wirkung und steigern durch die erhöhte Polwechselfrequenz die Bremskraft. Sie kompensieren zumindest teilweise den Bremskraftverlust, der durch die Bremsung selbst und die Abnahme der Fallgeschwindigkeit hervorgerufen wird. Dieser Effekt tritt nicht nur beim erstmaligen Eintreten in die Bremsstrecke (21) auf, sondern bei jedem Belagwechsel (Werkstoff und/oder Belagdicke).

Die Überdeckung läßt sich auch quer zur Schienenachse über die Eintauchtiefe des Leitteils (6) in das jochartige Erregerteil (5) verändern. Diese Maßnahme bietet sich vor allem im Schienenbereich oberhalb des Leitbelags (14) an. Die Breite des Belagträgers (17) bzw. der Schiene kann über die Fallstrecke zunehmen und die Bremskraft steigern. Alternativ oder zusätzlich kann auch die Breite der Magnetelemente (8) variieren. Ansonsten ist es günstig, zumindest im voll wirksamen Bremsbereich die Belagelemente (14) bzw. den Belagträger (17) breiter als die Magnetelemente (8) zu machen und beidseits überstehen zu lassen.

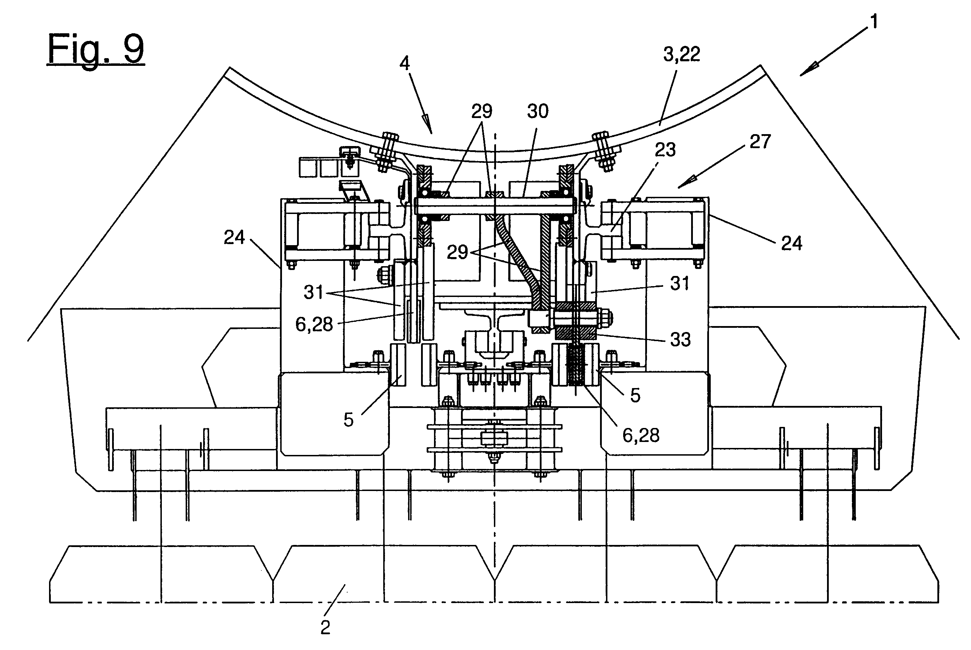

Im gezeigten Ausführungsbeispiel von Fig. 1 bis 8 sind Erreger- und Leitteil (5,6) starr an ihren Tragkonstruktionen angeordnet. In einer in Figur 9 bis 11 dargestellten und nachfolgend näher beschriebenen Variante kann auch eine bewegliche Anordnung der Erreger- und/oder Leitteile (5,6) vorgesehen sein. Durch einen geeigneten Stellantrieb können z.B. die am Fahrgastträger (2) angeordneten Erregerteile (5) zum Bremsen vorgeschoben und in Überdeckung mit den Leitteilen (6) gebracht werden. In Ruhestellung oder zum Lösen der Wirbelstrombremse (4), z.B. beim Hochziehen des Fahrgastträgers (2) können die Erregerteile (5) zurückgezogen und außer Eingriff genommen werden. Eine rückstellende Feder oder dgl. kann als Ausfallsicherung dienen. Die Zustellanordnung und die Kinematik können auch umgedreht werden.

Eine weitere Beeinflussungsmöglichkeit besteht über die Variation der wirksamen Breite des Luftspalts (7) zwischen den Magnetelementen (8) und dem Belagträger (17). Der Belagträger (17) besteht aus einem zumindest elektrisch, ggf. auch magnetisch leitenden Material, z. B. Baustahl oder rostfreiem Stahl. Durch Änderung der Schienendicke (17) kann die Breite des Luftspalts (7) verändert werden. Je größer die Schienendicke und je kleiner der Luftspalt (7) ist, desto höher ist die Bremskraft.

Ferner besteht noch eine Einflußmöglichkeit über die Magnetstärke. Z.B. können unterschiedlich starke Magnetelemente (8) zum Einsatz kommen, was sich durch Materialwahl oder durch Verwendung und Ansteuerung von Elektromagneten realisieren läßt. Diese Variante eignet sich besonders für eine stationäre Anordnung der Erregerteile (5).

Am Ende der Bremsstrecke (21) stellt sich im wesentlichen ein Gleichgewicht zwischen der Erdanziehungskraft und der Bremskraft der Wirbelstrombremse (4) ein. Die Bremsauslegung wird so gewählt, daß der Fahrgastträger bei einer Endgeschwindigkeit von ca. 1,5 m/s hat. Zum Abbremsen auf Stillstand genügt ein relativ kleiner Stoßdämpfer.

Zur Aufnahme der Seitenkräfte der Wirbelstrombremse (4) kann zusätzlich die Gleitführung (18) herangezogen werden. Sie besteht aus einer am Mast (22) befestigten vertikalen Führungsschiene (20), an der von drei Seiten Gleitschuhe (19) angreifen. Die Gleitschuhe (19) sind an den Jocharmen (13) und am Verbindungselement zwischen den beiden Jochen (12) angeordnet.

Die Wirbelstrombremse (4) kann mit einer Sicherungs- und Überwachungseinrichtung versehen sein, die z.B. geeignete Meßelemente für die Feldstärke des Erregerteils (5), die Temperatur des Leitteils (6) oder dgl. aufweist und Betriebsstörungen signalisiert bzw. im Gefahrfall die Belustigungsvorrichtung (1) abschaltet.

Die Wirbelstrombremse (4) kann auch eine Einrichtung (27) zum Abschalten oder Schwächen der Bremswirkung für die Rückwärtsfahrt des Fahrgastträgers (2) aufweisen. Dies ist vor allem für das Fallgerüst (1) in der gezeigten Ausführungsform von Vorteil. Vorzugsweise wird die Bremswirkung in der Rückwärtsbewegungsrichtung des Fahrgastträgers (2) geschwächt. Dies geschieht durch ein zumindest teilweises Auseinanderbewegen von Erregerteil (5) und Leitteil (6). Vorzugsweise ist hierzu das Leitteil (6) in der Rückwärtsbewegungsrichtung des Fahrgastträgers (2), d.h. in Mastrichtung nach oben, ausweichfähig angeordnet.

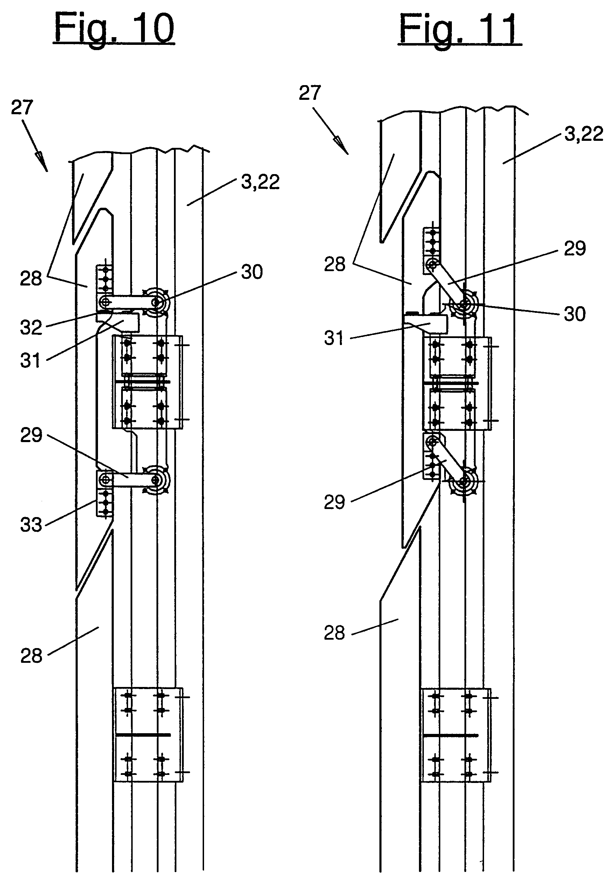

Dies kann durch eine schwenkbare Lagerung (30) mit mehreren Lenkern (29) geschehen. Vorzugsweise kommt ein Parallelogramm-Lenkergetriebe zum Einsatz, das das Leitteil (6) unter Beibehaltung seiner vertikalen Ausrichtung zurückweichen läßt. Das Leitteil (6) wird dann beim Hochziehen des Fahrgastträgers (2) vom Erregerteil (5) durch Magnetkraft mitgenommen und während der Hubbewegung zumindest teilweise außer Eingriff mit dem Joch (12) gebracht. Durch die verkleinerte Überdeckung zwischen Leit- und Erregerteil (6,5) verringert sich die der Hubbewegung entgegenstehende Bremskraft. Figur 9 zeigt in der rechten Bildhälfte die Bremsstellung und in der linken Hälfte die Abschaltstellung mit zurückgezogenem Leitteil (6). Figur 10 und 11 zeigen die beiden Stellungen in Seitenansicht.

Hierbei empfiehlt es sich, das Leitteil (6) in mehrere einzeln bewegliche Segmente (28) zu unterteilen, die nacheinander beim Überfahren des Erregerteils (5) ausweichen. Die Ober- und Unterkanten der Segmente (28) können entsprechend der Bewegungsrichtung schräg ausgerichtet sein. Die Rückstellung der ausgewichenen Segmente (28) bzw. des kompletten Leitteils (6) geschieht durch Schwerkraft. Alternativ kann auch ein Antrieb vorhanden sein.

Außerdem kann am Mast (22) eine Reihe von Anschlägen (31) angeordnet sein, die z.B. die Segmente (28) bzw. das Leitteil (6) gabelförmig seitlich umgreifen. Die über Schwenklager (30) innenseitig der Anschläge (31) gelagerten Lenker (29) tragen am Ende einen seitlich über die Anschläge (31) vorstehenden Bolzen, mit dem sie drehbar am Segment (28) bzw. Leitteil (6) angreifen. Der Bolzen liegt in Betriebs- und Bremsstellung an den Anschlägen (31) auf. Er kann einen Dämpfer (32) als Endlagenstütze aufweisen. Zusätzlich können Sensoren (33) an den Anschlägen (31) vorhanden sein, die die Einnahme der Betriebs- und Bremsstellung von Leitteil (6) bzw. den Elementen signalisieren. Dadurch lassen sich Ausfälle von einzelnen Segmenten (28) rechtzeitig erkennen und gegebenenfalls Gegenmaßnahmen treffen bzw. sicherheitshalber die Wirbelstrombremse (4) abschalten.

Abwandlungen der gezeigten Ausführungsform sind in verschiedener Weise möglich. Zum einen kann die Bremsstrecke (21) nach oben über einen größeren Bereich, gegebenenfalls auch die gesamte Turmhöhe des Mastes (22) verlängert werden. Im oberen Bereich sind dann beispielsweise nackte Schienen (17) vorhanden, deren Dicke und/oder Breite über die Fallstrecke ändert und zunimmt. Dadurch tritt gleich zu Anfang eine vergleichsweise schwache Bremswirkung ein. Die Leitbeläge (14) sind dann erst im unteren Schienenbereich und der vorbeschriebenen Weise angebracht.

Eine weitere Variationsmöglichkeit besteht in der kinematischen Umkehr von Erregerteil (5) und Leitteil (6) bzw. auch einer kinematischen Umkehr der Gleitführung (18). Das Joch kann ferner von zwei Leitteilen (6) gebildet werden, die ein Erregerteil (5) umgreifen. Anstelle der Jochform kann auch jede andere beliebige Zuordnung von Erreger- und Leitteil (5,6) zum Einsatz kommen. Zur Justierung der Wirbelstrombremse (4) sind geeignete Verstellmechanismen an den Leit- und Erregerteilen (5,6) angeordnet.

Schließlich kann die Wirbelstrombremse auch als Drehteil und Rotationsbremse ausgebildet sein und z.B. an den Rädern von Fahrgastträgern (2), an Seilwinden, Getrieben oder dgl. angeordnet sein. Die Bremswirkung wird dann vorzugsweise durch Abstandsänderung von Leit- und Erregerteil erzielt.

### BEZUGSZEICHENLISTE

- 1: Belustigungsvorrichtung
- 2: bewegliches Vorrichtungsteil, Fahrgastträger
- 3: stationäres Vorrichtungsteil, Gestell
- 4: Bremseinrichtung, Wirbelstrombremse
- 5: Erregerteil, Magnetanordnung
- 6: Leitteil, elektrische Leitanordnung
- 7: Luftspalt
- 8: Magnetelement
- 9: Tragleiste
- 10: Zwischenstück
- 11: Abdeckung
- 12: Magnetträger, Joch
- 13: Jocharm
- 14: Leitbelag
- 15: Belagelement
- 16: Abdeckung
- 17: Belagträger, Schiene
- 18: Gleitführung
- 19: Gleitschuh
- 20: Führungsschiene
- 21: Bremsstrecke
- 22: Mast
- 23: Fahrschiene
- 24: Fahrwerk
- 25: Hubantrieb
- 26: Plattform
- 27: Abschalteinrichtung
- 28: Segment
- 29: Lenker
- 30: Schwenklager
- 31: Anschlag
- 32: Dämpfer
- 33: Sensor

## Patentansprüche

1. Volksbelustigungsvorrichtung mit mindestens einem Fahrgastträger (2) und mit einer Bremseinrichtung (4), wobei der Fahrgastträger (2) an einem stationären Vorrichtungsteil (3) beweglich angeordnet ist, keinen eigenen Antriebsmotor besitzt und bei der Abwärtsfahrt durch Schwerkraft antreibbar ist, dadurch **gekennzeichnet**, daß die Bremseinrichtung (4) als Wirbelstrombremse ausgebildet ist.

2. Vorrichtung nach Anspruch 1, dadurch **gekennzeichnet**, daß die Wirbelstrombremse (4) als Linearbremse ausgebildet ist.

3. Vorrichtung nach Anspruch 1 oder 2, dadurch **gekennzeichnet**, daß die Wirbelstrombremse (4) eine über die Bremsstrecke (21) im wesentlichen konstante Bremswirkung aufweist.

4. Vorrichtung nach Anspruch 1, 2 oder 3, dadurch **gekennzeichnet**, daß die Wirbelstrombremse (4) mindestens ein Erregerteil (5) und mindestens ein Leitteil (6) aufweist, die jeweils einem der Vorrichtungsteile (2,3) zugeordnet sind.

5. Vorrichtung nach Anspruch 1 oder einem der folgenden, dadurch **gekennzeichnet**, daß das Erregerteil (5) und das Leitteil (6) schienenförmig mit einer endlichen und vorzugsweise unterschiedlichen Länge ausgebildet sind.

6. Vorrichtung nach Anspruch 1 oder einem der folgenden, dadurch **gekennzeichnet**, daß das Erregerteil (5) und Leitteil (6) einander jochförmig umgreifen.

7. Vorrichtung nach Anspruch 1 oder einem der folgenden, dadurch **gekennzeichnet**, daß im Bereich der Wirbelstrombremse (4) eine zusätzliche Gleitführung (18) angeordnet ist.

8. Vorrichtung nach Anspruch 1 oder einem der folgenden, dadurch **gekennzeichnet**, daß das Erregerteil (5) mehrere in Reihe angeordnete Magnetelemente (8) mit abwechselnder Polung aufweist.

9. Vorrichtung nach Anspruch 1 oder einem der folgenden, dadurch **gekennzeichnet**, daß zwei Erregerteile (5) ein Leitteil (6) jochartig umgreifen, wobei die jeweils einander gegenüberliegenden Magnetelemente (8) der beiden Erregerteile (5) eine unterschiedliche Polung aufweisen.

10. Vorrichtung nach Anspruch 8 oder 9, dadurch **gekennzeichnet**, daß die Magnetelemente (8) auf einer magnetisch leitenden Tragleiste (9) nebeneinander angeordnet und durch nichtmagnetische Zwischenstücke (10) voneinander distanziert sind.

11. Vorrichtung nach Anspruch 8, 9 oder 10, dadurch **gekennzeichnet**, daß die Magnetelemente (8) mit einer Abdeckung (11) versehen sind.

12. Vorrichtung nach Anspruch 1 oder einem der folgenden, dadurch **gekennzeichnet**, daß die Magnetelemente (8) eine über die Bremsstrecke (21) unterschiedliche Elementlänge und/oder unterschiedliche Abstände aufweisen.

13. Vorrichtung nach Anspruch 1 oder einem der folgenden, dadurch **gekennzeichnet**, daß das Leitteil (6) einen Belagträger (17) und ein oder mehrere elektrisch leitende Belagelemente (15) aufweist.

14. Vorrichtung nach Anspruch 1 oder einem der folgenden, dadurch **gekennzeichnet**, daß die Belagelemente (15) eine über die Bremsstrecke (21) unterschiedliche Dicke und/oder unterschiedliche Werkstoffe aufweisen.

15. Vorrichtung nach Anspruch 1 oder einem der folgenden, dadurch **gekennzeichnet**, daß der Belagträger (17) als metallische Schiene ausgebildet ist und beidseits Belagelemente (15) aufweist.

16. Vorrichtung nach Anspruch 1 oder einem der folgenden, dadurch **gekennzeichnet**, daß zwei Belagträger (17) nebeneinander angeordnet und von zwei jochförmigen Magnetträgern (12) umgriffen sind, wobei zwischen den Magnetträgern (12) die Gleitführung (18) angeordnet ist.

17. Vorrichtung nach Anspruch 1, dadurch **gekennzeichnet**, daß das Erregerteil (5) und das Leitteil (6) quer zur Längsachse eine veränderliche Überdeckung aufweisen.

18. Vorrichtung nach Anspruch 1 oder einem der folgenden, dadurch **gekennzeichnet**, daß die Belagträger (17) am Gestell (3) und die Magnetträger (12) am Fahrgastträger (2) angeordnet sind.

19. Vorrichtung nach Anspruch 1 oder einem der folgenden, dadurch **gekennzeichnet**, daß die Wirbelstrombremse (4) eine Einrichtung (27) zum Abschalten oder Schwächen der Bremswirkung in der Rückwärtsbewegungsrichtung des beweglichen Vorrichtungsteils (2) aufweist.

20. Vorrichtung nach Anspruch 19, dadurch **gekennzeichnet**, daß das Erregerteil (5) und das Leitteil (6) in der Rückwärtsbewegungsrichtung des beweglichen Vorrichtungsteils (2) gegeneinander ausweichfähig angeordnet und durch Schwerkraft oder durch einen Antrieb rückstellbar sind.

21. Vorrichtung nach Anspruch 19 oder 20, dadurch **gekennzeichnet**, daß das ausweichfähige Erregerteil (5) oder Leitteil (6) in mehrere einzeln bewegliche Segmente (28) unterteilt ist.

22. Vorrichtung nach Anspruch 19, 20 oder 21, dadurch **gekennzeichnet**, daß das Leitteil (6) oder dessen Segmente (28) mit parallelen Lenkern (29) und Schwenklagern (30) ausweichfähig angeordnet sind.

23. Vorrichtung nach Anspruch 19, 20, 21 oder 22, dadurch **gekennzeichnet**, daß das ausweichfähige Erregerteil (5) oder Leitteil (6) oder die einzeln beweglichen Segmente (28) Sensoren (33) zum Signalisieren der Arbeitsstellung und Bremsfunktion aufweisen.

## Claims

1. Public amusement system having at least one passenger vehicle (2) and having a braking device (4), in which the passenger vehicle (2) is movably disposed on a stationary system part (3), does not possess its own drive motor and can be driven by gravity in the course of the downward travel, characterized in that the braking device (4) is designed as an eddy current brake.

2. System according to Claim 1, characterized in that the eddy current brake (4) is designed as a linear brake.

3. System according to Claim 1 or 2, characterized in that the eddy current brake (4) has a braking action which is substantially constant over the braking path (21).

4. System according to Claim 1, 2 or 3, characterized in that the eddy current brake (4) has at least one exciter part (5) and at least one conductive part (6), which are allocated in each instance to one of the system parts (2, 3).

5. System according to Claim 1 or one of the following claims, characterized in that the exciter part (5) and the conductive part (6) are designed in rail-like fashion with a finite and preferably differing length.

6. System according to Claim 1, or one of the following claims, characterized in that the exciter part (5) and conductive part (6) embrace one another in yoke-like fashion.

7. System according to Claim 1 or one of the following claims, characterized in that an additional slide guide (18) is disposed in the region of the eddy current brake (4).

8. System according to Claim 1 or one of the following claims, characterized in that the exciter part (5) has a plurality of magnet elements (8) of alternating polarity which are disposed in series.

9. System according to Claim 1 or one of the following claims, characterized in that two exciter parts (5) embrace a conductive part (6) in the manner of a yoke, the respectively mutually opposite magnet elements (8) of the two exciter parts (5) having a differing polarity.

10. System according to Claim 8 or 9, characterized in that the magnet elements (8) are disposed side by side on a magnetically conductive carrier strip (9) and are spaced from one another by non-magnetic intermediate pieces (10).

11. System according to Claim 8, 9 or 10, characterized in that the magnet elements (8) are provided with a capping (11).

12. System according to Claim 1 or one of the following claims, characterized in that the magnet elements (8) have an element length differing over the braking path (21) and/or differing spacings.

13. System according to Claim 1 or one of the following claims, characterized in that the conductive part (6) has a covering carrier (17) and one or more electrically conductive covering elements (15).

14. System according to Claim 1 or one of the following claims, characterized in that the covering elements (15) have a thickness differing over the braking path (21) and/or differing materials.

15. System according to Claim 1 or one of the following claims, characterized in that the covering carrier (17) is designed as a metallic rail and has covering elements (15) on both sides.

16. System according to Claim 1 or one of the following claims, characterized in that two covering carriers (17) are disposed side by side and are embraced by two yoke-type magnet carriers (12), the slide guide (18) being disposed between the magnet carriers (12).

17. System according to Claim 1, characterized in that the exciter part (5) and the conductive part (6) have a variable overlap transversely to the longitudinal axis.

18. System according to Claim 1 or one of the following claims, characterized in that the covering carriers (17) are disposed on the frame (3) and the magnet carriers (12) on the passenger vehicle (2).

19. System according to Claim 1 or one of the following claims, characterized in that the eddy current brake (4) has a device (27) for disabling or attenuating the braking action in the rearward direction of movement of the movable system part (2).

20. System according to Claim 19, characterized in that the exciter part (5) and the conductive part (6) are disposed to be able to move aside from one another in the rearward direction of movement of the movable system part (2) and can be reset by gravity or by a drive.

21. System according to Claim 19 or 20, characterized in that the exciter part (5) or conductive part (6) which is capable of moving aside is subdivided into a plurality of individually movable segments (28).

22. System according to Claim 19, 20 or 21, characterized in that the conductive part (6) or the segments (28) thereof are disposed to be capable of moving aside by parallel guiding devices (29) and pivot bearings (30).

23. System according to Claim 19, 20, 21 or 22, characterized in that the exciter part (5) or conductive part (6) which is capable of moving aside or the individually movable segments (28) have sensors (33) to signal the working position and braking function.

## Revendications

1. Installation de divertissement comportant au moins un support (2) de passagers et un dispositif de freinage (4), le support (2) de passagers étant monté mobile sur une partie (3) fixe de l'installation, ne possédant pas de moteur d'entraînement et pouvant être entraîné par gravité lors de la descente, caractérisée en ce que le dispositif de freinage (4) est réalisé sous forme de frein à courants de Foucault.

2. Installation selon la revendication 1, caractérisée en ce que le frein à courants de Foucault (4) est réalisé sous forme de frein linéaire.

3. Installation selon la revendication 1 ou 2, caractérisée en ce que le frein à courants de Foucault (4) a une action de freinage sensiblement constante sur la distance de freinage (21).

4. Installation selon la revendication 1, 2 ou 3, caractérisée en ce que le frein à courants de Foucault (4) présente au moins un élément d'excitation (5) et au moins un élément conducteur (6) qui sont respectivement associés à une des parties (2, 3) de l'installation.

5. Installation selon la revendication 1 ou l'une des suivantes, caractérisée en ce que l'élément d'excitation (5) et l'élément conducteur (6) sont réalisés en forme de rail avec une longueur finie et de préférence différente.

6. Installation selon la revendication 1 ou l'une des suivantes, caractérisée en ce que l'élément d'excitation (5) et l'élément conducteur (6) sont disposés l'un autour de l'autre en forme de culasse.

7. Installation selon la revendication 1 ou l'une des suivantes, caractérisée en ce qu'un guidage à glissement (18) supplémentaire est disposé dans la zone du frein à courants de Foucault (4).

8. Installation selon la revendication 1 ou l'une des suivantes, caractérisée en ce que l'élément d'excitation (5) comporte plusieurs éléments magnétiques (8) alignés à polarité alternée.

9. Installation selon la revendication 1 ou l'une des suivantes, caractérisée en ce que deux éléments d'excitation (5) entourent en forme de culasse un élément conducteur (6), les éléments magnétiques (8) en vis-à-vis des deux éléments d'excitation (5) présentant une polarité différente.

10. Installation selon la revendication 8 ou 9, caractérisée en ce que les éléments magnétiques (8) sont disposés les uns à côté des autres sur une barre-support (9) magnétiquement conductrice et sont espacés les uns des autres par des éléments intermédiaires (10) non magnétiques.

11. Installation selon la revendication 8, 9 ou 10, caractérise en ce que les éléments magnétiques (8) sont pourvus d'un dispositif de recouvrement (11).

12. Installation selon la revendication 1 ou l'une des suivantes, caractérisée en ce que les éléments magnétiques (8) ont une longueur et/ou un écartement qui varie(nt) sur la distance de freinage (21).

13. Installation selon la revendication 1 ou l'une des suivantes, caractérisée en ce que l'élément conducteur (6) comporte un support de garniture (17) et un ou plusieurs éléments de garniture (15) électriquement conducteurs.

14. Installation selon la revendication 1 ou l'une des suivantes, caractérisée en ce que les éléments de garniture (15) ont une épaisseur qui varie sur la distance de freinage (21) et/ou sont en un matériau qui varie sur la distance de freinage (21).

15. Installation selon la revendication 1 ou l'une des suivantes, caractérisée en ce que le support de garniture (17) est réalisé sous forme de rail métallique et comporte des deux côtés des éléments de garniture (15).

16. Installation selon la revendication 1 ou l'une des suivantes, caractérisée en ce que deux supports de garniture (17) sont disposés l'un à côté de l'autre et sont entourés par deux supports d'amant (12) en forme de culasse, le guidage à glissement (18) étant disposé entre les supports d'amant (12).

17. Installation selon la revendication 1, caractérisée en ce que l'élément d'excitation (5) et l'élément conducteur (6) présentent un recouvrement variable transversalement à l'axe longitudinal.

18. Installation selon la revendication 1 ou l'une des suivantes, caractérisée en ce que les supports de garniture (17) sont disposés sur le bâti (3) et les supports d'aimant (12) sur le support (2) de passagers.

19. Installation selon la revendication 1 ou l'une des suivantes, caractérisée en ce que le frein à courants de Foucault (4) comporte un dispositif (27) pour couper ou atténuer l'action de freinage dans la direction de déplacement vers l'arrière de la partie (2) mobile de l'installation.

20. Installation selon la revendication 19, caractérisée en ce que l'élément d'excitation (5) et l'élément conducteur (6) sont disposés de façon à pouvoir s'écarter l'un par rapport à l'autre dans la direction de déplacement vers l'arrière de la partie (2) mobile de l'installation et peuvent être rappelés par gravité ou par un dispositif d'entraînement.

21. Installation selon la revendication 19 ou 20, caractérisée en ce que l'élément d'excitation (5) ou l'élément conducteur (6) susceptible de s'écarter est subdivisé en plusieurs segments (28) mobiles individuellement.

22. Installation selon la revendication 19, 20 ou 21, caractérisée en ce que l'élément conducteur (6) ou ses segments (28) sont disposés de façon à pouvoir s'écarter avec des bras (29) parallèles et des supports pivotants (30).

23. Installation selon la revendication 19, 20, 21 ou 22, caractérisée en ce que l'élément d'excitation (5) ou l'élément conducteur (6) susceptible de s'écarter ou les segments (28) mobiles individuellement comportent des détecteurs (33) destinés à signaler la position de travail et la fonction de freinage.
